# EUROPEAN PATENT SPECIFICATION

(11) **EP 1 383 262 B1**
(45) Date of publication and mention of the grant of the patent: **08.04.2009**
(21) Application number: 01937957.7
(22) Date of filing: 08.05.2001
(51) Int. Cl.: H04W 36/00

(54) **DIRECTED RETRY METHOD BASED ON MACRO DIVERSITY IN CDMA SYSTEM**
GERICHTETES ZUGANGSVERSUCHSVERFAHREN AUF DER BASIS VON MAKRO-DIVERSITY IN EINEM CDMA-SYSTEM
PROCEDE D'ACCES REDIRIGE (DIRECTED RETRY) BASE SUR LA MACRODIVERSITE DANS UN SYSTEME CDMA

(30) Priority: 07.12.2000 CN 00127825
(43) Date of publication of application: 21.01.2004
(73) Proprietor: Huawei Technologies Co., Ltd., Nanshan District, Shenzhen 518057 (CN)
(72) Inventor: ZHU, Qing, Huawei Service Centre Building, Nanshan District 518057 (CN)
(74) Representative: Körber, Martin Hans
(86) International application number: PCT/CN2001/000691
(87) International publication number: WO 2002/047305

(56) References cited:
- WO-A-98/05175
- WO-A-98/56203
- WO-A-98/56203
- WO-A-99/60811
- CN-A- 1 073 561
- US-A- 5 293 641
- US-A- 5 357 559

## Description

### FIELD OF THE INVENTION

The invention relates to wireless mobile communication technology, more particularly, it relates to a method for retrying directly in CDMA system based on the macro diversity. The method can be used in CDMA cellular mobile communication system for retrying directly while channel establishment and the channel reassignment of the mobile station are failed.

### BACKGROUND OF THE INVENTION

CDMA (Code Division Multiple Access) is a spread spectrum communication technology, and it is used mainly for the military communication at its initial stage. Because of its excellent performances, it is used widely in commercial communication area. The commercial CDMA cellular mobile communication systems have been operated currently in the telecommunication networks.

In a CDMA system, the same carrier frequency can be shared by different users, and they are distinguished with each other by using the code words. For the same reason, one user can use a plurality of code words to communicate simultaneously on a certain frequency. If these code words belong to different cells, then a plurality of wireless links will communicate simultaneously. The state of a plurality of wireless links existing simultaneously between the mobile station and the base station is referred to as the macro diversity. The implementation of the macro diversity function allows that when it is switched between the same frequency, the communication between the mobile station and the base station will not be interrupted. Meanwhile, because of the utilization of the diversity technology, the mobile station and the base station can obtain a better link quality.

When the mobile station initializes a call and makes a request for access, it is necessary for the base station to perform an admission control, the admission control is a rather complicated procedure which has to consider a variety of factors. In a CDMA system, the object of the admission control is to ensure the idle wireless resources for the expected SIR (signal to interference) and bit rate. When the mobile station initializes a call in a new cell by a new calling or switching, it shall normally perform an admission control. Furthermore, when it is required to reassign dynamically the channels by the mobile station due to some reasons (for example, the variation of the service type) during the communication, the admission control is also required to complete. Because CDMA is a self-interfering system, while the wireless resources are to be considered, the system interference affected by the access of the user will also be considered generally at the same time. When the wireless resources of a certain cell are limited or the load thereof is too heavy, the admission of the mobile station may be failed. The failure of a cell does not represent that the other cells in the system also do not possess resources, if guiding the mobile station to a certain suitable cell at this time, then the mobile station can access or communicate continuously. This procedure, in which after the admission to the access cell or the current cell fails the mobile station will access another cell under the control of the base station, is referred to as direct retrying, also directional retrying.

In GSM, when a dedicated channel is assigned to the mobile station, and no dedicated channel resources is possessed by the access cell, then the direct retrying (or referred to as directional retrying) will be implemented. When accessing, the mobile station carries the measurement reports of the adjacent cells, this provides a foundation for selecting the target cell by the direct retrying after access being failed. In patent application WO9856203 and patent US 5 293 641, the direct retrying, which is decided under the assistance of the measurement reports, has been studied to a deep extent. While in some mobile communication system or at some moment, the direct retrying may not be supported by the measurement reports. At this time, another method may be used to select the target cell to improve the success rate of the user access, meanwhile, also to decrease the number of the times of the switching and the signaling interacting caused by the switching after the mobile station accessed the target cell successfully, and thereby, to optimize the system performance.

WO 99/60811 discloses a method of selectively directing a mobile station to retry system access in a radio telecommunication system. This method is based on exploiting signal strength information obtained by a mobile switching center from neighbor cells.

### SUMMARY OF THE INVENTION

By aiming at the above problems, the object of the invention is to provide a direct retrying method in a CDMA system based on macro diversity for improving the success rate of the user access, and also to decrease the number of times of switching and the signaling interacting caused by switching after the mobile station being accessed successfully, thereby to optimize the system performances.

This object is achieved by the method as defined in claim 1, embodiments of the invention are defined in the dependent claims.

### BRIEF DESCRIPTION OF THE DRAWINGS

Fig. 1 is an illustration diagram of a flowchart of a direct retrying method based on the concept of the macro diversity.
Fig. 2 is an illustration diagram of the base station distribution for implementing switching by utilizing the method of the invention.

### DETAILED DESCRIPTION OF THE PREFERRED EMBODIMENTS

If a mobile station initiates a call in a certain cell of the mobile communication system and requests to establish a link but it is failed to implement the cell admission due to some reasons (for example, the limited cell resources), then the base station will guide the mobile station to access other cells. In some mobile communication systems (for example, GSMs), the target cell can be selected by the base station based on the measurement information of the mobile station. However, under some circumstances, the measurement reports required by the base station for making decision can not be obtained, at this time, it is required to implement direct retrying. The method provided by the invention supports the direct retrying without the requirement for the measurement reports, in addition, the method also supports the direct retrying caused by failure of channel re-configuration of the mobile station.

Before introducing the method of the invention, a definition for the cell used in the description of the method of the invention will be given firstly: in a CDMA system, a cell is determined by a down link main scramble code on a carrier frequency. If there are two carrier frequencies in one cell, then it will be considered as two cells according to the method of the invention.

In a CDMA system, when the mobile station requests an admission (including readmission), there are target cells or target cell sets, and the cells in the target cell set have the same frequency. In general, the target cells are the cells that the mobile station selects to reside or communicates previously, the probability that the base station locates in the areas covered by these cells is rather high. If the admission is failed, sufficiently utilize of the information of these cells to select the target cell for direct retrying will increase the success rate of the direct retrying.

In a CDMA system, because the same carrier frequency can be shared by different cells, the resources in one or more cells can be requested simultaneously by the mobile station, for the same reason, the transceivers of one or more cells can contact with the mobile station. Therefore, when implementing admission control, there is a target cell set, in which the cells have the same frequency, for the mobile station, the mobile station will request for the resources in these cells. When admission to these cells fails, if the cell information can be used sufficiently, then the decision for direct retrying will be provided advantageously.

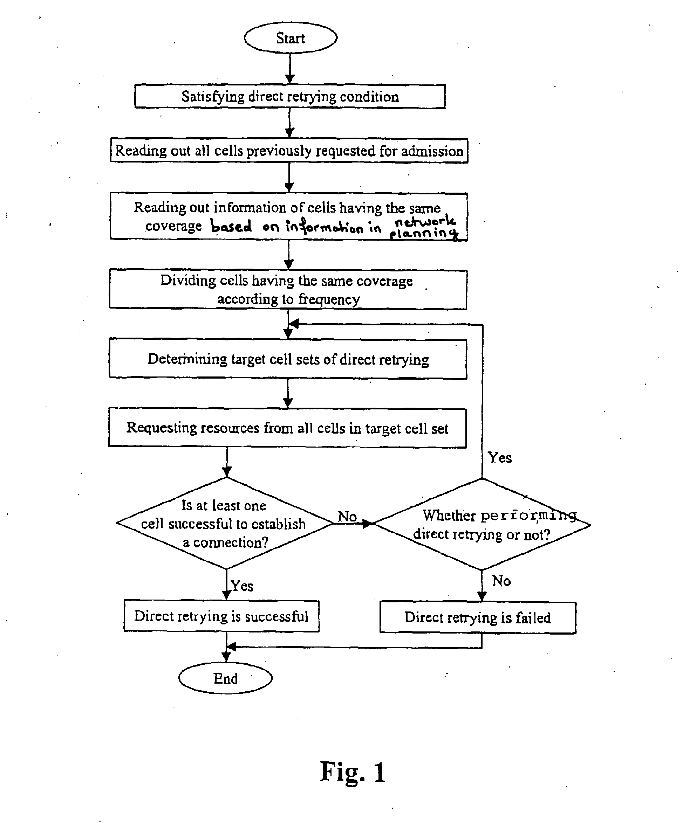

Please refer to Fig. 1 for the detailed steps of the present invention, as generally defined in claim 1,
(1) determining whether a condition for direct retrying decision is satisfied, the condition for direct retrying being statisfied when admission of a mobile station to a cell is failed or after failure of channel re-configuration during the communication procedure with the mobile station;
(2) reading out identifiers of cells, which are previously requested for admission;
(3) determining all ef the cells covering the same areas as those cells in step (2) by using the cell information of the network planning;
(4) dividing the cells determined in step (3) according to frequencies to obtain different sets of the cells, wherein cells in a cell set have the same frequency;
(5) selecting one cell set from the above different cell sets as a target cell set for direct retrying;
(6) requesting resources from all the cells in the target cell set for direct retrying;
(7) if admission of the mobile station to at least one cell within the target cell set for direct retrying is successful, then the direct retrying is successful;
if admission of the mobile station to each cell within the target cell set for direct retrying is failed, then no action is taken, or another target cell set is selected for retrying the admission .

If the admission of the mobile station to at least one cell within the above target cell set of the direct retrying is failed, then the action will not be taken, or another target cell set will be selected for retrying the admission again

The condition for direct retrying decision in said step (1) further comprises causing the interruption of the link of the mobile station.

The identifiers of cells that are previously requested for admission in step (2) comprise identifiers of all of the cells that are requested for admission during the access of the mobile station, or identifiers for all of the cells in the active set for the mobile station before direct retrying.

Using cell information in network planning in step (3) comprises using cell distribution information in the network to determine the cells covering the same areas.

When implementing direct retrying, the cells covering the same areas will be considered preferably. When dividing the cells covering the same areas according to frequencies, the cell set on a certain frequency is outputted for each direct retrying decision.

When requesting resources from all of the cells in the target cell set in said step (6), it is required that all of the cells in the said target cell set will request for the resources simultaneously.

After failure of admission to a target cell set having a carrier frequency and after selection of another target cell set for direct retrying in step (7), the direct retrying is imple-mented in the cells of a target cell set having a different carrier frequency.

When a cell previously requested for admission has a plurality of carrier frequencies, said cell is divided into a number of cells, wherein the number equals to the number of the carrier frequencies, and each cell has only one carrier frequency.

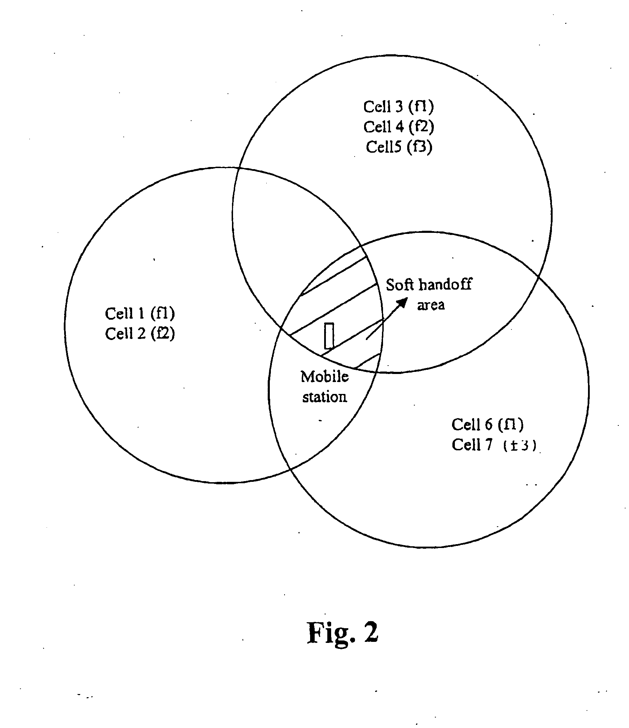

The method of the invention will be further explained by with reference to Fig. 2. As an example; three base stations and seven cells are included, in Fig. 2, "□" is used to indicate mobile station, the frequencies of the carrier frequency is as follows:
Cell 1: f1, Cell 2: f2, Cells 1 and 2 cover the same areas.
Cell 3: f1, Cell 4: f2, Cell 5: f3, Cells 3, 4, and 5 cover the same area.
Cell 6: f1, Cell 7: f3, Cells 6 and 7 cover the same area.

The mobile station locates initially in the soft handoff area shown in Fig. 2 (the shadow portion in the drawing), and communicates on carrier frequency f1. The mobile station is in the soft handoff state and communicates simultaneously with Cells 1, 3, and 6. If the service feature of the mobile station changes at this time, re-configuration of channels will be required. Assuming that all of the re-configurations of channels of Cells 1, 3, and 6 are failed, then decision of the direct retrying will be required. Identifiers of Cells 1, 3, and 6, which connected previously with the mobile station is acquired first. It is known that Cells 1, 3, 6 and Cells 2, 4, 5, 7 cover the same areas respectively according to the network planning. Two cell sets can be obtained by classifying the cells depending on frequencies: f2{Cell 2, Cell 4}, f3{Cell 5, Cell 7}. A Cell f2 is selected among them for using as a target cell set for direct retrying, and resources are requested by the mobile station based on target cell set given by direct retrying. If at least one cell between Cell 2 or Cell 4 accesses successfully, then retrying is successful, if both of them access successfully, it enters into the macro diversity state. If requesting the resources of both Cells 2 and 4 are failed, then it will consider that the retrying is failed, at this time, it will be retried again in the cell set f3.

It is evident that under the same condition, the probability of failure of requesting two cells is smaller that that of requesting one cell by the mobile station for resources. Therefore, the success rate of direct retrying based on the concept of macro diversity is higher than the success rate of general direct retrying. That is, the new method for the direct retrying provided by the present invention can obtain better performances.

### Industry Applicability

By using the above direct retrying method in CDMA system based on macro diversity according to the present invention, the following advantages are acquired:
(1) The success rate of the user access in the CDMA mobile communication system can be increased, the probability caused by the user line cut off due to the re-configuration of the channels can be decreased, as well as the number of times of the switching and the signaling interaction caused by the switching after switching successfully can also be decreased, thereby the object for optimizing the system performances can be reached.
(2) The concept of making auxiliary decision by using cell information in network planning and the concept of cells covering the same areas are introduced herein, so that the accuracy and the reasonableness of the mobile station positioning is increased;
(3) A better quality of the links is provided for the mobile station.

## Claims

1. A direct retrying method in CDMA system based on the macro diversity, wherein, said method comprises the step of:
(1) determining whether a condition for direct retrying decision is satisfied, the condition for direct retrying being satisfied when admission of a mobile station to a cell is failed or after failure of channel re-configuration during the communication procedure with the mobile station;
(2) reading out identifiers of cells, which are previously requested for admission;
(3) determining all of the cells covering the same areas as those cells in step (2) by using the cell information of the network planning;
(4) dividing the cells determined in step (3) according to frequencies to obtain different sets of the cells, wherein cells in a cell set have the same frequency;
(5) selecting one cell set from the above different cell sets as a target cell set for direct retrying;
(6) requesting resources from all of the cells in the target cell set for direct retrying;
(7) if admission of the mobile station to at least one cell within the target cell set for direct retrying is successful, then the direct retrying is successful;
if admission of the mobile station to each cell within the target cell set for direct retrying is failed, then no action is taken, or another target cell set is selected for retrying the admission.

2. The method of claim 1, wherein the condition for direct retrying decision further comprises conditions causing the interruption of the link of the mobile station.

3. The method of claim 1, wherein said identifiers of cells that are previously requested for admission in step (2) comprise identifiers of all the cells that are requested for admission during the access of the mobile station, or all the cells in the active set for the mobile station before direct retrying.

4. The method of claim 1, wherein using cell information in network planning comprises using cell distribution information in the network to determine the cells covering the same areas.

5. The method of claim 1, wherein when dividing the determined cells covering the same area according to frequencies, the cell set on a certain frequency is outputted for each direct retrying decision.

6. The method of claim 1, wherein, when requesting resources from all the cells in the target cell set in step (6), it is required that all the cells in said target cell set request for the resources simultaneously.

7. The method of claim 1, wherein after failure of admission to a target cell set having a carrier frequency and after selection of another target cell set for direct retrying in step (7), the direct retrying is implemented in the cells of a target cell set having a different carrier frequency.

8. The method of claim 1 or 7, wherein when a cell previously requested for admission has a plurality of carrier frequencies, said cell is divided into a number of cells, wherein the number equals to the number of the carrier frequencies, and each cell has only one carrier frequency.

## Patentansprüche

1. Direktwiederholungsverfahren in einem CDMA-System, das auf Makro-Diversity basiert, wobei das Verfahren die Schritte umfasst:
(1) Bestimmen, ob eine Bedingung für eine Direktwiederholungsentscheidung erfüllt ist, wobei die Bedingung zur Direktwiederholung erfüllt ist, wenn ein Zugang einer Mobilstation zu einer Zelle fehlgeschlagen ist, oder nach einem Fehlschlagen einer Kanal-Rekonfiguration während des Kommunikationsvorgangs mit der Mobilstation;
(2) Auslesen von Identifizierern von Zellen, die zuvor für den Zugang angefordert wurden;
(3) Bestimmen all der Zellen, die die gleichen Bereiche abdecken wie jene Zellen in Schritt (2) unter Verwendung der Zellinformation der Netzplanung;
(4) Aufteilen der Zellen, die in Schritt (3) bestimmt wurden, nach Frequenzen, so dass verschiedene Zellensets erhalten werden, wobei die Zellen in einem Zellenset die gleiche Frequenz aufweisen;
(5) Auswählen von einem Zellenset aus den obigen verschiedenen Zellensets als Zielzellen-Set für die Direktwiederholung;
(6) Anfordern von Ressourcen von allen Zellen in dem Zielzellen-Set für die Direktwiederholung;
(7) falls der Zugang von der Mobilstation zu zumindest einer Zelle in dem Zielzellen-Set für die Direktwiederholung erfolgreich ist, ist die Direktwiederholung erfolgreich;
falls der Zugang von der Mobilstation zu jeder Zelle in dem Zielzellen-Set für die Direktwiederholung fehlschlägt, wird kein Vorgang vorgenommen oder ein anderes Zielzellen-Set wird ausgewählt, um den Zugang zu wiederholen.

2. Verfahren nach Anspruch 1, wobei die Bedingung für die Direktwiederholungsentscheidung ferner Bedingungen umfasst, die eine Unterbrechung der Verbindung von der Mobilstation bewirken.

3. Verfahren nach Anspruch 1, wobei die Identifizierer der Zellen, die zuvor für den Zugang in Schritt (2) angefordert wurden, Identifizierer all der Zellen umfassen, die für den Zugang während des Zugriffs der Mobilstation angefordert werden, oder all der Zellen in dem aktiven Set für die Mobilstation vor der Direktwiederholung.

4. Verfahren nach Anspruch 1, wobei das Verwenden der Zellinformation bei der Netzplanung das Verwenden einer Zellverteilungsinformation in dem Netzwerk umfasst, um die Zellen zu bestimmen, die die gleichen Bereiche abdecken.

5. Verfahren nach Anspruch 1, wobei beim Aufteilen der bestimmten Zellen, die nach Frequenzen den gleichen Bereich abdecken, das Zellenset einer bestimmten Frequenz für jede Direktwiederholungsentscheidung ausgegeben wird.

6. Verfahren nach Anspruch 1, wobei beim Anfordern der Ressourcen von allen Zellen in dem Zielzellen-Set in Schritt (6) erforderlich ist, dass alle der Zellen in dem Zielzellen-Set gleichzeitig die Ressourcen anfordern.

7. Verfahren nach Anspruch 1, wobei nach Fehlschlagen des Zugangs zu einem Zielzellen-Set mit einer Trägerfrequenz und nach Auswahl eines anderen Zielzellen-Sets für die Direktwiederholung in Schritt (7) das Direktwiederholen in den Zellen eines Zielzellen-Sets mit einer unterschiedlichen Trägerfrequenz implementiert wird.

8. Verfahren nach Anspruch 1 oder 7, wobei, wenn eine Zelle, die zuvor den Zugang angefordert hat, eine Vielzahl von Trägerfrequenzen aufweist, die Zelle in eine Anzahl von Zellen unterteilt wird, wobei die Anzahl der Anzahl an Trägerfrequenzen entspricht und jede Zelle nur eine Trägerfrequenz hat.

## Revendications

1. Procédé d'accès redirigé dans un système CDMA basé sur la macro diversité, dans lequel ledit procédé comprend l'étape de:
(1) déterminer si une condition pour une décision d'accès redirigé direct est satisfaite, la condition pour l'accès redirigé direct étant satisfaite lorsque l'admission d'une station mobile à une cellule est défaillante ou après la défaillance de la reconfiguration du canal durant la procédure de communication avec la station mobile;
(2) lire les identificateurs des cellules qui sont demandés préalablement à l'admission;
(3) déterminer toutes les cellules couvrant les mêmes zones que les cellules dans l'étape (2) en utilisant les informations de cellules de la planification du réseau;
(4) diviser les cellules déterminées à l'étape (3) selon les fréquences pour obtenir différents ensembles de cellules, où les cellules dans un ensemble de cellules ont la même fréquence;
(5) sélectionner un ensemble de cellules des différents ensembles de cellules ci-dessus comme ensemble de cellules cible pour l'accès redirigé direct;
(6) demander des ressources de toutes les cellules dans l'ensemble de cellules cible pour l'accès redirigé direct;
(7) si l'admission de la station mobile à au moins une cellule dans l'ensemble de cellules cible pour l'accès direct redirigé aboutit, alors l'accès redirigé direct aboutit;
si l'admission de la station mobile à chaque cellule dans l'ensemble de cellules cible pour l'accès redirigé direct est défaillante, alors aucune action n'a lieu, ou bien un autre ensemble de cellules cible est sélectionné pour l'accès redirigé de l'admission.

2. Procédé selon la revendication 1, dans lequel la condition pour la décision d'accès redirigé direct comprend en outre des conditions provoquant l'interruption de la liaison de la station mobile.

3. Procédé selon la revendication 1, dans lequel les identifiants de cellules qui sont préalablement requis pour l'admission dans l'étape (2) comprennent des identifiants de toutes les cellules qui sont requis pour l'admission durant l'accès de la station mobile, ou de toutes les cellules dans l'ensemble actif pour la station mobile avant l'accès redirigé direct.

4. Procédé selon la revendication 1, où l'utilisation des informations des cellules dans un planning de réseau comprend l'utilisation des informations de distribution des cellules dans le réseau pour déterminer les cellules couvrant les mêmes zones.

5. Procédé selon la revendication 1, dans lequel lors de la division des cellules déterminées comme couvrant la même zone en accord avec des fréquences, l'ensemble de cellules sur une certaine fréquence est émis pour chaque décision d'accès redirigé direct.

6. Procédé selon la revendication 1, dans lequel lors de la requête de ressources de toutes les cellules dans l'ensemble de cellules cible dans l'étape (6), il est requis que toutes les cellules dans ledit ensemble de cellules cible demandent les ressources simultanément.

7. Procédé selon la revendication 1, dans lequel après la défaillance de l'admission à un ensemble de cellules cible ayant une fréquence de porteuse et après la sélection d'un autre ensemble de cellules cible pour l'accès redirigé direct dans l'étape (7), l'accès redirigé direct est réalisé dans les cellules d'un ensemble de cellules cible ayant une fréquence de porteuse différente.

8. Procédé selon la revendication 1 ou 7, dans lequel lorsqu'une cellule requise préalablement pour l'admission possède une pluralité de fréquences porteuses, ladite cellule est divisée en un nombre de cellules, où le nombre est égal au nombre de fréquences porteuses, et chaque cellule possède une seule fréquence de porteuse.
